# EUROPÄISCHE PATENTSCHRIFT

(11) **EP 2 189 808 B1**
(45) Veröffentlichungstag und Bekanntmachung des Hinweises auf die Patenterteilung: **13.03.2013**
(21) Anmeldenummer: 08169777.3
(22) Anmeldetag: 24.11.2008
(51) Int. Cl.: G01S 7/524

(54) **Vorrichtung zur Ansteuerung einer Ultraschall-Sende/Empfangseinheit**
Device for controlling an ultrasound transmission/reception device
Dispositif de commande d'une unité d'émission/réception à ultrasons

(43) Veröffentlichungstag der Anmeldung: 26.05.2010
(73) Patentinhaber: ELMOS Semiconductor AG, 44227 Dortmund (DE)
(72) Erfinder: Spiegel, Egbert Dr., 45891 Gelsenkirchen (DE)
(74) Vertreter: von Kreisler Selting Werner

(56) Entgegenhaltungen:
- DE-A1- 2 350 921
- DE-A1- 10 248 677
- JP-A- 2008 237 280
- US-A- 6 074 346
- US-A1- 2003 158 478
- US-B1- 6 432 055

## Beschreibung

Die Erfindung betrifft eine Vorrichtung zur Ansteuerung einer Ultraschall-Sende/Empfangseinheit, wie sie beispielsweise für die Abstandsmessung in Fahrzeugen insbesondere bei Park Distance Control (PDC)-Systemen eingesetzt wird.

Ultraschall-Sende/Empfangseinheiten können sowohl Ultraschallwellen aussenden als auch diese ausgesendeten Wellen nach Reflektion an einem Gegenstand, der sich innerhalb des Erfassungsbereichs der Ultraschall-Sende/Empfangseinheit befindet, empfangen. Hierzu werden die Ultraschall-Sendeeinheiten während eines Sendeintervalls aktiv angesteuert, um beispielsweise Burst-Signale auszusenden, während die Ansteuerung der Ultraschall-Sende/Empfangseinheiten während der Dauer von Empfangsintervallen deaktiviert ist. Um während eines Empfangsintervalls auch noch Ultraschallwellen mit geringst möglicher Amplitude (nach Umsetzung in eine elektrische Spannung von bis zu einigen 10 µV) erfassen zu können, müssen die Ultraschall-Sende/Empfangseinheiten recht unempfindlich gegenüber Betriebsspannungsänderungen sein. Dem eigentlichen Ultraschall-Sende/Empfangselement, bei dem es sich beispielsweise um ein Piezoelement handelt, ist ein Spannungstransformator vorgeschaltet, der primärseitig mit beispielsweise einer Bordnetzspannung von 12 bzw. 28 V angesteuert wird und sekundärseitig eine Spannung von +/- 50 V ausgibt. Primärseitige Störungen mit Wechselstromanteilen werden also um das Übersetzungsverhältnis des Transformators verstärkt auf die Sekundärseite übertragen. Störungen können insbesondere über die der Energiezufuhr zum Transformator dienenden Leitungen hervorgerufen werden.

Aus US-B-6 432 055 ist eine Ultraschall-Sende/Empfangseinheit für medizintechnische Anwendungen mit einer Ansteuerung der zuvor genannten Art bekannt, wobei eine Ansteuereinheit zur Versorgung der Ultraschall-Sende/Empfangseinheit mit Wechselstrom-Betriebsenergie aus einer Gleichstrom-Energiezufuhr eine EIN/AUS-Schalteinheit während eines Sendeintervalls zur Ausgabe von Ultraschallwellen einschaltet und wobei die Ultraschall-Sende/Empfangseinheit während eines Empfangsintervalls Ultraschallwellen, insbesondere reflektierte Ultraschallwellen empfängt.

Aufgabe der Erfindung ist es, während des Betriebs einer Ultraschall-Sende/Empfangseinheit sich auf den Sender bzw. Empfänger auswirkende Störungen weiter zu reduzieren.

Zur Lösung dieser Aufgabe wird mit der Erfindung eine Vorrichtung zur Ansteuerung einer Ultraschall-Sende/Empfangseinheit vorgeschlagen, die in einem Sendeintervall zum Aussenden von Ultraschallwellen betreibbar und in einem anschließenden Empfangsintervall zum Empfang von Ultraschallwellen, vorzugsweise zum Empfang der zuvor ausgesendeten und von einem Gegenstand reflektierten Ultraschallwellen betreibbar ist, und die insbesondere für eine Abstandsmessvorrichtung eines Fahrzeuges vorgesehen ist, wobei die Vorrichtung versehen ist mit den Merkmalen des Anspruchs 1. Einzelne Ausgestaltungen der Erfindung sind Gegenstand der Unteransprüche.

Erfindungsgemäß ist also vorgesehen, die Versorgung der Ultraschall-Sende/Empfangseinheit mit Energie während der Empfangsintervalle zu unterbrechen. Damit wird die Ultraschall-Sende/Empfangseinheit während der Empfangsintervalle stromlos geschaltet, d.h. von jeglicher Energiezufuhr abgeschaltet. Somit können sich auch beispielsweise in dem Bordnetz existierende Störungen nicht auf eine Beeinträchtigung der Empfangssignale der Ultraschall-Sende/Empfangseinheit auswirken.

Erfindungsgemäß erfolgt die Unterbrechung der Energieversorgung mit Hilfe einer EIN/AUS-Schalteinheit. Diese EIN/AUS-Schalteinheit befindet sich in der einer Gleichstrom-Energiezufuhr für den Betrieb der Ultraschall-Sende/Empfangseinheit dienenden Leitung, also z.B. derjenigen Leitung, die im Falle eines Fahrzeuges der Verbindung mit dem Plus-Pol der Bordnetzspannung dient. Wenn diese Leitung dann für die Dauer der Empfangsintervalle unterbrochen ist, können auch keinerlei Störsignale vom Bordnetz aus auf die Ultraschall-Sende/Empfangseinheit einwirken.

Normalerweise wird die Ultraschall-Sende/Empfangseinheit aus einer Gleichstrom-Energiequelle gespeist. Zum Betrieb der Ultraschall-Sende/Empfangseinheit benötigt man aber eine Wechselspannung, die durch beispielsweise gegenphasig getaktete Schalter in Kombination mit einer Stromquelle und einer einen Mittelabgriff aufweisenden Primärspule eines Transformators der Ultraschall-Sende/Empfangseinheit erzeugt wird. Diese Schaltungsanordnung bewirkt alternierende Stromflüsse in wechselweise umgekehrter Richtung durch jeweils unterschiedliche Hälften der Primärspule, wodurch Burst-Impulssignale erzeugt werden können. Die Ansteuerung dieser Schalter erfolgt also bei eingeschalteter EIN/AUS-Schalteinheit während der Sendeintervalle, während derer die Sendeenergie zur Verfügung gestellt werden muss. Während der Empfangsintervalle ist die EIN/AUS-Schalteinheit ausgeschaltet; zu diesen Zeiten könnten die zuvor genannten Schalter von der Ansteuereinheit weiterhin angesteuert werden, was aber wenig sinnvoll wäre, da die Versorgungsenergiequelle abgekoppelt ist.

Erfindungsgemäß ist in der Leitung für die Gleichstrom-energiezufuhr eine Stromquelle angeordnet ist, die mit Hilfe der EIN/AUS-Schalteinheit aktiviert bzw. deaktiviert wird. Dies erfolgt beispielsweise dadurch, dass die EIN/AUS-Schalteinheit einen Schalter aufweist, der parallel zu einer Stromspiegelschaltung der Stromquelle geschaltet ist. Eine weitere Möglichkeit besteht darin, dass die Transistoren der Stromspiegelschaltung jeweils mit Schaltern versehen sind, über die sie sich bei gemeinsamer Ansteuerung dieser Schalter inaktiv bzw. aktiv schalten lassen.

Bei einer bevorzugten Ausgestaltung der erfindungsgemäßen Vorrichtung ist vorgesehen,
- dass die Ultraschall-Sende/Empfangseinheit einen Spannungstransformator mit einer Primärspule mit zwei Endanschlüssen und einem Mittelanschluss und eine mit einem Ultraschall-Sende/Empfangselement verbundene Sekundärspule aufweist,
- dass die Ansteuereinheit zwei gegenphasig getaktete Schalter ansteuert, die untereinander verbunden sowie mit jeweils einem der Endanschlüsse der Primärspule verbunden sind,
- dass eine Leitung für die Gleichstrom-Energiezufuhr mit dem Mittelanschluss der Primärspule verbunden ist,
- dass eine Stromquelle in der Gleichstrom-Energiezufuhrleitung oder in einer zum Verbindungspunkt der beiden Schalter führenden Leitung angeordnet ist und
- dass die EIN/AUS-Schalteinheit in der Gleichstrom-Energiezufuhrleitung angeordnet ist.

Es hat sich als zweckmäßig herausgestellt, wenn die EIN/AUS-Schalteinheit, die Ansteuereinheit und die Stromquelle als integrierte Schaltung ausgeführt sind.

Die Erfindung wird nachfolgend anhand zweier Ausführungsbeispiele und unter Bezugnahme auf die Zeichnung näher erläutert. Im einzelnen zeigen dabei:
- Fig. 1: schematisch die Ansteuerschaltung einer Ultraschall-Sende/Empfangseinheit nach dem Stand der Technik,
- Fig. 2: ein erstes Ausführungsbeispiel der Beschaltung zur Ansteuerung einer Ultraschall-Sende/Empfangseinheit und
- Fig. 3: ein zweites Ausführungsbeispiel einer Beschaltung einer Ansteuerung einer Ultraschall-Sende/Energieeinheit.

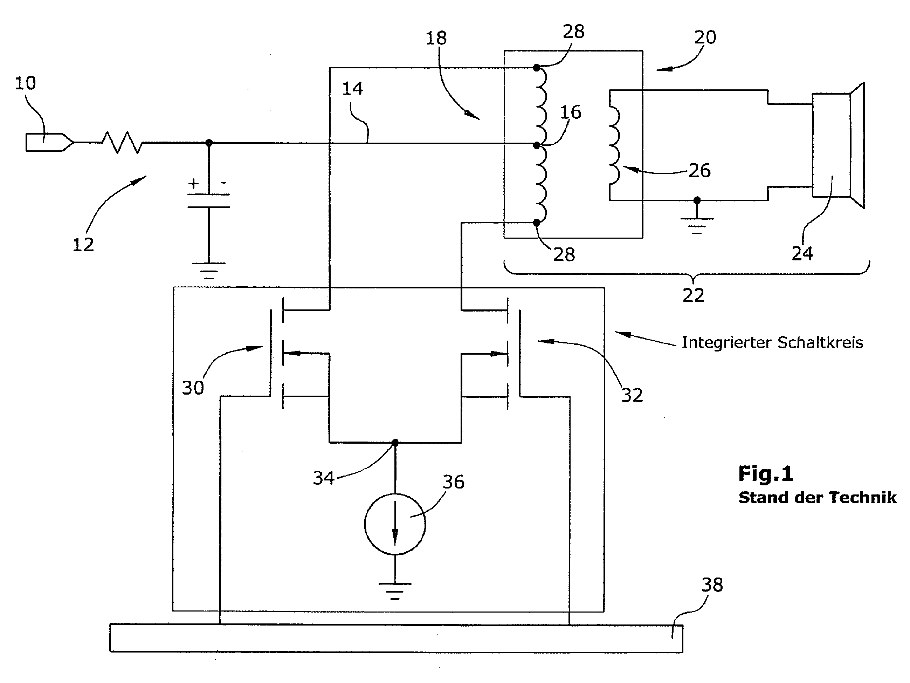

Fig. 1 zeigt eine Beschaltung nach dem Stand der Technik. Die Schaltung nach Fig. 1 umfasst eine unipolare Energiequelle 10, die über eine Filterschaltung 12 über eine Leitung 14 mit dem Mittelabgriff 16 einer Primärspule 18 eines Transformators 20 verbunden ist. Der Transformator 20 ist Teil einer Ultraschall-Sende/Empfangseinheit 22, die ein Ultraschall-Sende/Empfangselement 24 (z.B. Piezo-Element) aufweist, welches mit der Sekundärspule 26 des Transformators 20 verbunden ist.

An den beiden Endanschlüssen 28 der Primärspule 18 ist jeweils ein Halbleiterschalter 30 bzw. 32 angeschlossen, wobei diese beiden Schalter 30,32 bei 34 untereinander verbunden sind. Mit dem gemeinsamen Verbindungspunkt 34 ist eine Stromquelle 36 verbunden.

Während eines Sendeintervalls wird die Ultraschall-Sende/Empfangseinheit 22 mit elektrischer Energie zum Aussenden eines Ultraschall-Burst-Impulssignals angesteuert. Hierzu werden die beiden Schalter 30,32 gegenphasig getaktet angesteuert, was durch eine Ansteuereinheit 38 erfolgt. Durch die gegenphasige Ansteuerung fließt nun wechselweise und in jeweils umgekehrter Richtung durch die Primärspule 18 von deren Mittelabgriff 16 aus in den beiden Primärspulenhälften Gleichstrom, dessen Größe konstant und durch die Stromquelle 36 bestimmt ist. Auf diese Weise wird primärseitig des Transformators 20 aus der unipolaren Energiequelle 10 eine Wechselspannung erzeugt, die nach Transformation zur Ansteuerung des Ultraschall-Sende/Empfangselements 24 genutzt wird.

Während eines Empfangsintervalls werden die beiden Schalter 30,32 nicht angesteuert, so dass primärseitig an dem Transformator 20 keine Betriebsspannung anliegt. Aufgrund der Leitungsverbindung der Primärspule 18 mit der unipolaren Spannungsquelle 10 können aber immer noch Störungen mit Wechselanteilen in den Transformator 20 gelangen, die sekundärseitig zu Störungen führen, weshalb die Spannung am Ultraschall-Sende/Empfangselement 24, die auf den Empfang von Ultraschallwellen zurückzuführen ist, störbehaftet ist.

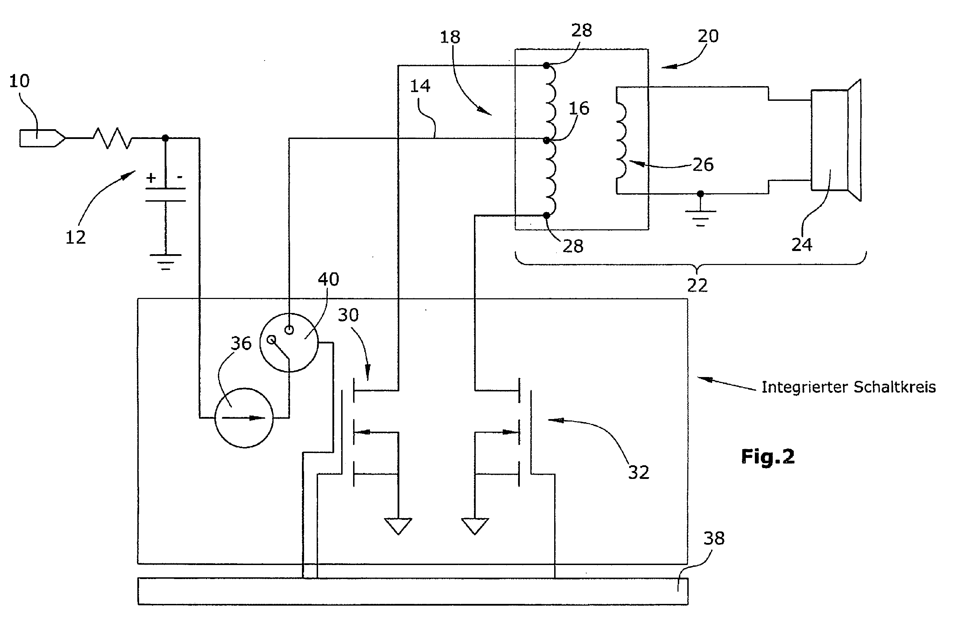

Um dieses Problem zu beheben, wird mit der Erfindung eine Beschaltung gemäß Fig. 2 vorgeschlagen. Soweit die in Fig. 2 gezeigten Elemente und Komponenten denjenigen der Schaltung nach Fig. 1 entsprechen bzw. gleich mit diesen sind, sind sie in Fig. 2 mit den gleichen Bezugszeichen versehen.

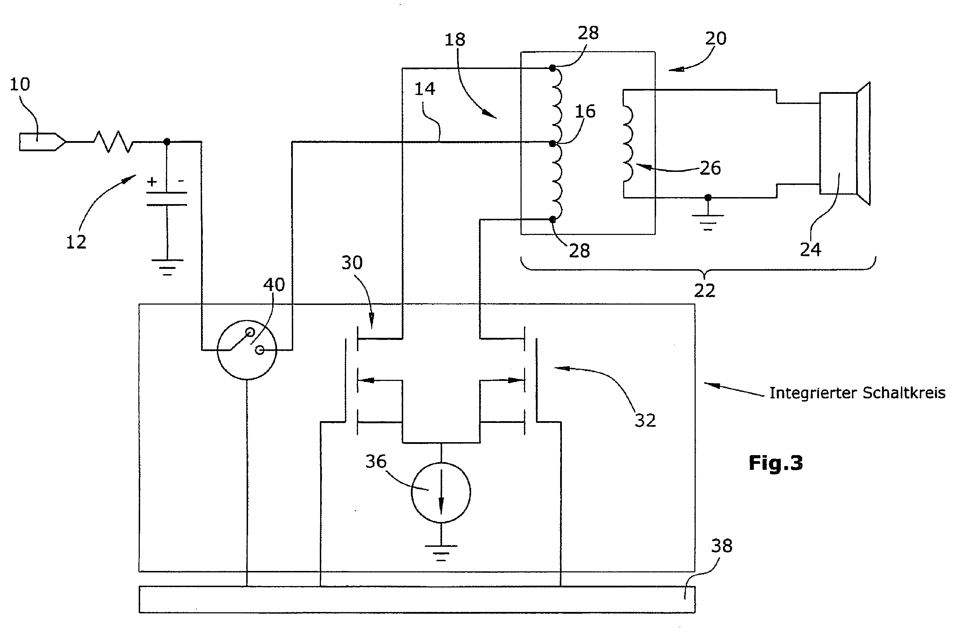

Der Unterschied der erfindungsgemäßen Beschaltung gemäß Fig. 2 zum Stand der Technik gemäß Fig. 1 ist darin zu sehen, dass die der Energieversorgung dienende Leitung 14 mit Hilfe einer EIN/AUS-Schalteinheit 40 unterbrochen wird, wenn die Ultraschall-Sende/Empfangseinheit 22 im Empfangsmode arbeitet. Bei der EIN/AUS-Schalteinheit 40 handelt es sich im einfachsten Fall um einen Halbleiterschalter, der von der Ansteuereinheit 38 gesteuert ein- oder ausgeschaltet wird. In Fig. 2 ist als weiterer Unterschied zur Beschaltung nach Fig. 1 zu erkennen, dass die Stromquelle 36 in die der Energiezufuhr zur Primärspule 18 dienenden Leitung 14 angeordnet ist. Diese Variante ist aber für die Erfindung nicht zwingend erforderlich, wie man anhand von Fig. 3 erkennen kann. Dort ist nämlich alleinig die EIN/AUS-Schalteinheit 40 in der Leitung 14 vorgesehen, während die Stromquelle 36 so, wie in Fig. 1 gezeigt, direkt mit den beiden Schaltern 30 und 32 verbunden ist.

Den beiden Ausführungsbeispielen der erfindungsgemäßen Schaltung nach den Fign. 2 und 3 gemeinsam ist also die Maßnahme, die Energiezufuhr zur Ultraschall-Sende/Empfangseinheit 22 für die Dauer der Empfangsintervalle also dann, wenn diese Einheit im Empfangsmodus arbeitet, abschalten zu können.

Die Erfindung wurde vorstehend anhand zweier Schaltungen (sowie unter Rückgriff auf die Schaltung nach dem Stand der Technik gemäß Fig. 1) erläutert, wobei aus Vereinfachungsgründen die Schaltungskomponenten für die Auswertung des Empfangssignals der Ultraschall-Sende/Empfangseinheit 22 nicht dargestellt sind. Ferner sei darauf hingewiesen, dass zweckmäßigerweise die EIN/AUS-Schalteinheit 40, die Stromquelle 36 und die beiden Schalter 30 und 32 als integrierter Schaltkreis ausgeführt sind.

## Patentansprüche

1. Vorrichtung zur Ansteuerung einer Ultraschall-Sende/Empfangseinheit, die in einem Sendeintervall zum Aussenden von Ultraschallwellen betreibbar und in einem anschließenden Empfangsintervall zum Empfang von Ultraschallwellen, vorzugsweise zum Empfang der zuvor ausgesendeten und von einem Gegenstand reflektierten Ultraschallwellen betreibbar ist, insbesondere für eine Abstandsmessvorrichtung eines Fahrzeuges, wobei die Vorrichtung versehen ist mit
- einer EIN/AUS-Schalteinheit (40) zum Ein- und Ausschalten einer Gleichstrom-Energiezufuhr über eine Leitung (14) an die Ultraschall-Sende/Empfangseinheit (22) und
- einer Ansteuereinheit (38) zur Versorgung der Ultraschall-Sende/Empfangseinheit mit Wechselstrom-Betriebsenergie aus der Gleichstrom-Energiezufuhr bei eingeschalteter EIN/AUS-Schalteinheit (40),
- wobei die Ansteuereinheit (38) die EIN/AUS-Schalteinheit (40) während eines Sendeintervalls einschaltet,
**dadurch gekennzeichnet ,**
- **dass** die Ansteuereinheit (38) die EIN/AUS-Schalteinheit (40) während eines Empfangsintervalls ausschaltet und
- **dass** in der Leitung (14) für die Gleichstrom-Energiezufuhr eine Stromquelle (36) angeordnet ist, die mittels der EIN/AUS-Schalteinheit (40) während eines Sendeintervalls aktivierbar und während eines Empfangsintervalls deaktivierbar ist.

2. Vorrichtung nach Anspruch 1, **dadurch gekennzeichnet, dass** die EIN/AUS-Schalteinheit (40) ein in einer Leitung (14) für die Gleichstrom-Energiezufuhr angeordneter EIN/AUS-Schalter ist.

3. Vorrichtung nach Anspruch 1, **dadurch gekennzeichnet, dass** die Ansteuereinheit (38) die Stromquelle (36), die mit einer Stromspiegelschaltung versehen ist, aufweist und dass die EIN/AUS-Schalteinheit (40) einen EIN/AUS-Schalter aufweist, der parallel zur Stromspiegelschaltung geschaltet ist.

4. Vorrichtung nach einem der Ansprüche 1 bis 3, **dadurch gekennzeichnet,**
- **dass** die Ultraschall-Sende/Empfangseinheit (22) einen Spannungstransformator (20) mit einer Primärspule (18) mit zwei Endanschlüssen (28) sowie einem Mittelanschluss (16) und eine mit einem Ultraschall-Sende/Empfangselement (24) verbundene Sekundärspule (26) aufweist,
- **dass** die Ansteuereinheit (38) zwei gegenphasig getaktete Schalter (30,32) ansteuert, die untereinander verbunden sowie mit jeweils einem der Endanschlüsse (28) der Primärspule (18) verbunden sind,
- **dass** die Leitung (14) für die Gleichstrom-Energiezufuhr mit dem Mittelanschluss (16) der Primärspule (18) verbunden ist und
- **dass** die EIN/AUS-Schalteinheit (40) in der Gleichstrom-Energiezufuhrleitung (14) angeordnet ist.

5. Vorrichtung nach Anspruch 4, **dadurch gekennzeichnet, dass** die Gleichstrom-Energiezufuhrleitung eine zum Verbindungspunkt (34) der beiden Schalter (30,32) führende Leitung ist.

6. Vorrichtung nach einem der Ansprüche 1 bis 5, **dadurch gekennzeichnet, dass** die EIN/AUS-Schalteinheit (40), die Ansteuereinheit (38), die Stromquelle (36) und, sofern vorhanden, die beiden Schalter (30,32) als integrierte Schaltung ausgeführt sind.

## Claims

1. A device for controlling an ultrasound transmission/reception unit, said device being operable in a transmission interval for transmitting ultrasonic waves and in a subsequent reception interval for receiving ultrasonic waves, preferably for receiving the ultrasonic waves that have been transmitted before and have been reflected from an object, particularly for use in a distance measurement system of a vehicle, said device comprising
- an ON/OFF switch unit (40) for switching on and off a direct current energy supply leading via a line (14) to said ultrasound transmission/reception unit (22), and
- a drive unit (38) for supplying the ultrasound transmission/reception unit with alternating current operation energy from said direct current energy supply in the switched-on state of the ON/OFF switch unit (40),
- said drive unit (38) being operative to switch on the ON/OFF switch unit (40) during a transmission interval,
**characterized in**
- **that** the drive unit (38) being operative to switch off the ON/OFF switch unit (40) during a reception interval, and
- **that**, in said line (14) for direct current energy supply, a current source (36) is arranged which, by means of the ON/OFF switch unit (40), is activatable during a transmission interval and is deactivatable during a reception interval.

2. The device according to claim 1, **characterized in that** the ON/OFF switch unit (40) is an ON/OFF switch arranged in the line (14) for direct current energy supply.

3. The device according to claim 1, **characterized in that** the drive unit (38) comprises the current source (36) which is provided with a current mirror circuit, and that the ON/OFF switch unit (40) comprises an ON/OFF switch connected parallel to said current mirror circuit.

4. The device according to any one of claims 1 to 3, **characterized in that**
- the ultrasound transmission/reception unit (22) comprises a voltage transformer (20) having a primary coil (18) with two end connectors (28) and with one intermediate connector (16), and a secondary coil (26) connected to an ultrasound transmission/reception element (24),
- that the drive unit (38) is operative to drive two switches (30,32) clocked with opposite phases, said switches being connected to each other and being connected to respectively one of said end connectors (28) of the primary coil (18),
- that the line (14) for direct current energy supply is connected to said intermediate connector (16) of the primary coil (18), and
- that the ON/OFF switch unit (40) is arranged in the line (14) for direct current energy supply.

5. The device according to claim 4, **characterized in that** the line for direct current energy supply is a line leading to the node (34) of said two switches (30,32).

6. The device according to any one of claims 1 to 5, **characterized in that** the ON/OFF switch unit (40), the drive unit (38), the current source (36) and, if existing, the two switches (30,32) are configured as an integrated circuit.

## Revendications

1. Dispositif de commande d'une unité d'émission/réception à ultrasons, qui est apte à fonctionner dans un intervalle d'émission pour émettre des ondes ultrasonores et dans un intervalle de réception subséquent pour recevoir des ondes ultrasonores, de préférence pour recevoir les ondes ultrasonores précédemment émises et réfléchies par un objet, en particulier pour un dispositif de mesure de distance d'un véhicule, le dispositif étant pourvu
- d'une unité de commutation marche/arrêt (40) pour la mise en circuit et hors circuit d'une alimentation en énergie à courant continu destinée à l'unité d'émission/réception à ultrasons (22) via une ligne (14), et
- d'une unité de commande (38) pour alimenter l'unité d'émission/réception à ultrasons en énergie de fonctionnement à courant alternatif à partir de l'alimentation en énergie à courant continu à l'état de mise en circuit de l'unité de commutation marche/arrêt (40),
- l'unité de commande (38) mettant en circuit l'unité de commutation marche/arrêt (40) pendant un intervalle d'émission,
**caractérisé en ce que**
- l'unité de commande (38) met hors circuit l'unité de commutation marche/arrêt (40) pendant un intervalle de réception, et
- **en ce qu'**est disposée dans la ligne (14), pour l'alimentation en énergie à courant continu, une source de courant (36) pouvant être activée pendant un intervalle d'émission et pouvant être désactivée pendant un intervalle de réception au moyen de l'unité de commutation marche/arrêt (40).

2. Dispositif selon la revendication 1, **caractérisé en ce que** l'unité de commutation marche/arrêt (40) est un commutateur marche/arrêt disposé dans une ligne (14) pour l'alimentation en énergie à courant continu.

3. Dispositif selon la revendication 1, **caractérisé en ce que** l'unité de commande (38) comporte la source de courant (36) pourvue d'un circuit miroir de courant et **en ce que** l'unité de commutation marche/arrêt (40) présente un commutateur marche/arrêt qui est monté en parallèle par rapport au circuit miroir de courant.

4. Dispositif selon l'une des revendications 1 à 3, **caractérisé en ce que**
- l'unité d'émission/réception à ultrasons (22) présente un transformateur de tension (20) pourvu d'une bobine primaire (18) comportant deux bornes d'extrémité (28) ainsi qu'une borne médiane (16), et d'une bobine secondaire (26) reliée à un élément émetteur-récepteur à ultrasons (24),
- l'unité de commande (38) commande deux commutateurs (30, 32) synchronisés en opposition de phase, qui sont reliés entre eux et reliés chacun à l'une des bornes d'extrémité (28) de la bobine primaire (18),
- la ligne (14) pour l'alimentation en énergie à courant continu est reliée à la borne médiane (16) de la bobine primaire (18), et
- l'unité de commutation marche/arrêt (40) est disposée dans la ligne d'alimentation en énergie à courant continu (14).

5. Dispositif selon la revendication 4, **caractérisé en ce que** la ligne d'alimentation en énergie à courant continu est une ligne menant au point de jonction (34) des deux commutateurs (30, 32).

6. Dispositif selon l'une des revendications 1 à 5, **caractérisé en ce que** l'unité de commutation marche/arrêt (40), l'unité de commande (38), la source de courant (36) et, le cas échéant, les deux commutateurs (30, 32) sont réalisés sous la forme d'un circuit intégré.
